# EUROPÄISCHE PATENTANMELDUNG

(11) **EP 4 353 632 A1**
(43) Veröffentlichungstag der Anmeldung: **17.04.2024**
(21) Anmeldenummer: 23201855.6
(22) Anmeldetag: 05.10.2023
(51) Int. Cl.: B65G 1/04, B65G 47/71, B65G 47/82, B65G 65/00

(54) **SYSTEM ZUM EINBRINGEN VON DÄMMSTOFFGROSSBALLEN IN EIN BEVORRATUNGSSYSTEM**

(30) Priorität: 10.10.2022 DE 102022126086
(71) Anmelder: GUTEX Holzfaserplattenwerk H. Henselmann GmbH + Co KG, 79761 Waldshut-Tiengen (DE)
(72) Erfinder: Wittkamp, Ingo, 31603 Diepenau (DE); Lieberherr, Samuel, 9642 Ebnat-Kappel (CH); Jaenke, Alexander, 9300 Wittenbach (CH)
(74) Vertreter: Grünecker Patent- und Rechtsanwälte PartG mbB

(57) **Zusammenfassung**

System zum Einbringen von Dämmstoffgroßballen in ein Bevorratungssystem, insbesondere einen Großballenauflöser, umfassend: eine Zuführstelle zum Zuführen von Dämmstoffgroßballen in ein Transportsystem, wobei das Transportsystem zum Transportieren von einem Dämmstoffgroßballen von der Zuführstelle zu einer Übergabestelle ausgebildet ist und mehrere Transportplätze für Dämmstoffgroßballen umfasst, eine Übergabevorrichtung zur Übergabe eines Dämmstoffgroßballens von der Übergabestelle des Transportsystems an das Bevorratungssystem.

## Beschreibung

Die Erfindung bezieht sich auf ein System zum Einbringen von Dämmstoffgroßballen in ein Bevorratungssystem, insbesondere einen Großballenauflöser.

Es ist bekannt, zur Dämmung von Gebäudeteilen, z.B. Wänden, Dächern und ähnlichem, Einblasdämmstoff in die jeweiligen Bauteile einzublasen. Einblasdämmstoff kann in verschiedenen Formen geliefert werden. Beispielsweise kann er in Dämmstoffgroßballen geliefert werden, wo der Dämmstoff in gepresster oder anderweitig komprimierter Form geliefert wird. Solche Dämmstoffgroßballen können beispielsweise zur Lieferung von Zellulose oder anderen Dämmstoffen, beispielsweise Holzfaser, verwendet werden. Solche Dämmstoffgroßballen können beispielsweise auf Paletten transportiert werden.

Dämmstoffgroßballen (insbesondere ohne Palette) haben typischerweise Maße von zwischen 80 cm und 120 cm in der Breite, 80 cm und 120 cm in der Tiefe und 120 cm bis 240 cm in der Höhe. Sie können ein Gewicht zwischen 160 kg und 420 kg aufweisen.

Bevor der Einblasdämmstoff aus den Dämmstoffgroßballen zur Dämmung eingeblasen werden kann, müssen diese Dämmstoffgroßballen aufgelöst und der Dämmstoff aufgelockert werden. Dies passiert mittels eines Bevorratungssystems, insbesondere eines Großballenauflösers, der beispielsweise eine Ballenfräse oder Ähnliches zum Auflösen und einen Rührer oder anderes Mittel zum Auflockern des Dämmstoffes umfassen kann.

Bekannt ist es, bei Bedarf, also wenn der Dämmstoff im Bevorratungssystem zur Neige geht oder ausgegangen ist, solche Dämmstoffgroßballen durch eine Person zum Bevorratungssystem zu transportieren, beispielsweise per Gabelstapler, sie durch die transportierende Person dort zu entpacken und in das Bevorratungssystem einzubringen. Dies hat den Nachteil, dass immer, wenn ein neuer Dämmstoffgroßballen benötigt wird, eine Person die entsprechenden Schritte durchführen muss und es somit zu Verzögerungen im Ablauf kommen kann. Zudem bindet ein solches Vorgehen personelle Ressourcen.

Die Erfindung liegt nun in einem System zum Einbringen von Dämmstoffgroßballen in ein Bevorratungssystem, insbesondere einen Großballenauflöser oder einen Bunker oder einen Zwischenbunker, das insbesondere automatisch Dämmstoffgroßballen in ein Bevorratungssystem, insbesondere einen Großballenauflöser oder Bunker oder Zwischenbunker, einbringen kann.

Das System zum Einbringen von Dämmstoffgroßballen in ein Bevorratungssystem, insbesondere einen Großballenauflöser, umfasst eine Zuführstelle zum Zuführen von Dämmstoffgroßballen in ein Transportsystem. Das System zum Einbringen von Dämmstoffgroßballen in ein Bevorratungssystem umfasst des Weiteren ein Transportsystem. Das Transportsystem ist zum Transportieren von einem Dämmstoffgroßballen von der Zuführstelle zu einer Übergabestelle ausgebildet und umfasst mehrere Transportplätze für Dämmstoffgroßballen. Ein Transportplatz kann insbesondere ein Platz sein, an dem ein Dämmstoffgroßballen abgelegt oder gelagert werden kann, und auf dem oder von dem ein Dämmstoffgroßballen weiter transportiert werden kann. Das System zum Einbringen von Dämmstoffgroßballen in ein Bevorratungssystem umfasst des Weiteren eine Übergabevorrichtung zur Übergabe der Dämmstoffgroßballen von der Übergabestelle des Transportsystems an ein Bevorratungssystem.

An der Zuführstelle kann eine Zuführung von Dämmstoffgroßballen, optional mit oder ohne Palette, auf ein Transportsystem mit Transportplätzen erfolgen. Die Zuführstelle zum Zuführen von Dämmstoffgroßballen in ein Transportsystem kann insbesondere eine Stelle sein, wo Transportplätze hin transportiert werden können, angehalten werden können und jeweils ein Dämmstoffgroßballen, optional mit oder ohne Palette, auf einen Transportplatz geladen werden kann. Alternativ oder zusätzlich kann die Zuführstelle eine Stelle sein, wo ein Transportplatz ist, auf den jeweils ein Dämmstoffgroßballen, optional mit oder ohne Palette, aufgeladen werden kann und von dort optional im Transportsystem weiterbewegt werden kann. An der Zuführstelle kann das System eine Tür umfassen, durch die hindurch Dämmstoffgroßballen in das Transportsystem geführt werden können, und/oder eine Parkmöglichkeit, zum Beispiel Parkbucht, für einen oder mehr Transportplätze.

Das Transportsystem kann eine oder mehrere Lagerstrecken umfassen. Eine Lagerstrecke kann beispielsweise eine Rollenbahn oder einen Kettenförderer oder ähnliches umfassen oder auf einer Rollenbahn oder einem Kettenförderer angeordnet sein. Eine Lagerstrecke kann zwei oder mehr Transportplätze umfassen, also insbesondere zwei oder mehr Plätze, auf denen ein Dämmstoffgroßballen liegen oder gelagert werden kann und von denen ein Dämmstoffgroßballen weiter transportiert werden kann.

Ein Transportsystem kann eine, zwei oder mehr Zuführstellen umfassen. Beispielsweise kann in einem Transportsystem jeweils eine Zuführstelle am Beginn einer Lagerstrecke angeordnet sein. Das Transportsystem kann somit insbesondere eine, zwei oder mehr Lagerstrecken und eine, zwei oder mehr Zuführstellen umfassen.

Das Transportsystem kann dafür ausgebildet sein, Dämmstoffgroßballen mit Palette zu transportieren. Alternativ oder zusätzlich kann das Transportsystem dafür ausgebildet sein, Dämmstoffgroßballen ohne Palette zu transportieren.

Das System zum Einbringen von Dämmstoffgroßballen in ein Bevorratungssystemkann eine, zwei oder mehr Übergabestellen im Transportsystem umfassen, von denen aus ein Dämmstoffgroßballen aus dem Transportsystem entfernt und an ein Bevorratungssystem übergeben werden kann. Die Übergabevorrichtung zur Übergabe des Dämmstoffgroßballens vom Transportsystem an ein Bevorratungssystem kann an oder bei einer Übergabestelle des Systems angeordnet oder zu dieser bewegbar, insbesondere bei dieser anordenbar, sein. Eine solche Übergabestelle kann insbesondere eine Stelle sein, wo Transportplätze hin transportiert werden können, angehalten werden können und Dämmstoffgroßballen von dem Transportplatz in das Bevorratungssystem befördert werden können, oder eine Stelle sein, an der ein Transportplatz liegt, von dem aus Dämmstoffgroßballen in ein Bevorratungssystem befördert werden können.

Die Übergabevorrichtung kann so angeordnet oder bewegbar, insbesondere anordenbar, sein, dass mit ihr ein Dämmstoffgroßballen, der an die Übergabestelle transportiert worden ist, an das Bevorratungssystem, insbesondere den Großballenauflöser, übergeben werden kann.

Diese Übergabe des Dämmstoffgroßballens kann direkt von der Übergabestelle an das Bevorratungssystem, z.B. per Ausstoßer, erfolgen. Alternativ kann die Übergabe indirekt von der Übergabestelle an das Bevorratungssystem erfolgen, z.B. über einen Transport des Dämmstoffgroßballens, insbesondere eines Dämmstoffgroßballens auf einer Palette, durch die Übergabevorrichtung, beispielsweise einem Lastaufnahmemittel für Paletten, von der Übergabestelle zu einem Bevorratungssystem.

Das System zum Einbringen von Dämmstoffgroßballen kann des Weiteren eine Zuführvorrichtung zum Zuführen von einem Dämmstoffgroßballen in das Transportsystem an der Zuführstelle umfassen. Beispielsweise kann die Zuführvorrichtung optional einen Ausstoßer oder Hubwagen oder Gabelstapler umfassen, der den Dämmstoffgroßballen von einer Position außerhalb des Transportsystems, insbesondere einer Lagerstelle, auf einen Transportplatz für Dämmstoffgroßballen, insbesondere an der Zuführstelle, befördern kann, insbesondere beispielsweise durch eine Türe, Öffnung oder ähnliches.

Die Übergabevorrichtung kann so ausgebildet oder steuerbar sein, dass sie automatisch (insbesondere ohne menschliche Intervention) einen Dämstoffgroßballen von der Übergabestelle an das Bevorratungssystem übergeben kann.

Die Übergabevorrichtung kann ein Lastaufnahmemittel für Paletten, z.B. eine Teleskopgabel, umfassen oder als solche ausgebildet sein, mit der ein Dämmstoffgroßballen auf einer Palette vom Transportsystem, beispielsweise einer Lagerstrecke, aufgenommen werden und an ein Bevorratungssystem übergeben werden kann. Lastaufnahmemittel für Paletten, insbesondere Teleskopgabeln, die von einer Zuführvorrichtung umfasst sein können, und für die Verwendung in einem System zum Einbringen von Dämmstoffgroßballen in ein Bevorratungssystem geeignet sind, sind beispielsweise Teleskopgabeln von Mias (https://mias-group.com/de/lastaufnahmemittel/paletten/). Die Verwendung von einem Lastaufnahmemittel für Paletten kann insbesondere vorteilhaft sein, als mit einer Teleskopgabel der Dämmstoffgroßballen samt Palette in und aus einem Bevorratungssystem transportiert werden kann und insbesondere ein vorheriges Entfernen des Dämmstoffgroßballens von der Palette somit entfallen kann.

Die Übergabevorrichtung kann alternativ oder zusätzlich einen Ausstoßer umfassen, der insbesondere dazu ausgebildet sein kann, einen Dämmstoffgroßballen von einem Transportplatz des Transportsystems in das Bevorratungssystem zu schieben.

Die Übergabevorrichtung, insbesondere beispielsweise ein Ausstoßer, kann optional drehbar angeordnet sein. Ein drehbarer Ausstoßer kann beispielsweise ein Ausstoßen von Dämmstoffgroßballen in verschiedene Richtungen ermöglichen. Dies kann insbesondere vorteilhaft sein, wenn das vorher beschriebene System zum Einbringen von Dämmstoffgroßballen dazu ausgebildet ist, Dämmstoffgroßballen in mehr als ein Bevorratungssystem, beispielsweise in zwei oder drei Bevorratungssysteme, einzubringen.

Die Übergabevorrichtung kann optional so angeordnet und ausgebildet sein, dass sie auch zum Entleeren des Bevorratungssystems benutzt werden kann, beispielsweise wenn ein Materialwechsel ansteht. Dazu kann sie insbesondere eine geeignete Vorrichtung umfassen, mit der ein Dämmstoffgroßballen, optional mit oder ohne Palette, wieder aus dem Bevorratungssystem entfernt werden kann.

Beispielsweise kann die Übergabevorrichtung, insbesondere ein Ausstoßer, ein Gerät zum Einstechen in den Dämmstoff, z.B. in Form einer Gabel mit ein, zwei, drei oder mehr Zinken, umfassen, mit der in den Dämmstoffgroßballen eingestochen werden kann, um diesen aus dem Bevorratungssystem zu entfernen. Alternativ oder zusätzlich kann die Übergabevorrichtung einen Mechanismus umfassen, mit dem der Dämmstoffgroßballen vor dem Entfernen im Bevorratungssystem angehoben werden kann. Somit kann der Dämmstoffgroßballen (oder Teile davon) wieder aus dem Bevorratungssystem entfernt werden. Insbesondere eine Übergabevorrichtung, die ein Lastaufnahmemittel für Paletten umfasst, kann sowohl zum Übergeben des Dämmstoffgroßballens (mit Palette) an das Bevorratungssystem und zum Entleeren des Bevorratungssystems (mit Palette) verwendbar sein. So kann beispielsweise, wenn ein Wechsel des Dämmmaterials ansteht, das noch im Bevorratungssystem vorhandene Dämmmaterial durch die Übergabevorrichtung entfernt werden und durch ein anderes Dämmmaterial ersetzt werden.

Wenn die Übergabevorrichtung ein Lastaufnahmemittel für Paletten umfasst, kann das Lastaufnahmemittel auch dafür ausgebildet sein, halbvolle oder leere Paletten wieder aus dem Bevorratungssystem zu entfernen. Optional kann das Lastaufnahmemittel für Paletten auch dafür ausgebildet sein, halbvolle Paletten auf einen Transportplatz, insbesondere einen Transportplatz einer vom System umfassten Lagerstrecke, zu transportieren und/oder leere Paletten an einen Lagerort für leere Paletten abzutransportieren.

Das Transportsystem kann eine, zwei oder mehr Lagerstrecken, beispielsweise auf einem oder mehreren Kettenförderern, und/oder eine Elektrohängebahn umfassen. Die Transportplätze können als Transportplätze auf der Lagerstrecke ausgebildet sein. Die Dämmstoffgroßballen können auf der Lagerstrecke beispielsweise mittels eines Kettenförderers oder Rollenbahnen bewegbar sein. Bei einer Elektrohängebahn können die Transportplätze beispielsweise als Gehänge an einer Elektrohängebahn ausgebildet sein, die optional einzeln angetrieben und individuell steuerbar sein können. Alternativ oder zusätzlich kann das Transportsystem eine Rollenbahn umfassen, auf der Dämmstoffgroßballen, optional einzeln angetrieben und individuell ansteuerbar, bewegt werden können. Die Transportplätze können insbesondere so ausgebildet sein, dass sie mit verschiedenen Sorten von Dämmstoffen beladen werden können. Insbesondere können sie für den Transport von Dämmstoffgroßballen mit den Maßen (ohne Palette) von zwischen 80 cm und 120 cm in der Breite, 80 cm und 120 cm in der Tiefe und 120 cm bis 240 cm in der Höhe und/oder einem Gewicht zwischen 160 kg und 420 kg, optional mit den zusätzlichen Maßen und Gewicht einer Palette, geeignet sein. Transportplätze können optional eine, zwei oder mehr Seitenstützen, insbesondere z.B. Geländer oderWände, umfassen. Damit kann insbesondere ein Umkippen von Großballen verhindert werden. Dies kann insbesondere bei Verwendung von Großballen aus Mineralwolle nützlich sein, weil Mineralwolle in stark komprimierter Form angeliefert wird und beim Entpacken in die Höhe expandiert.

Das Transportsystem kann mehrere Transportplätze, insbesondere zwei, drei oder eine Vielzahl von Transportplätzen umfassen. Die Transportplätze im Transportsystem können optional gleichzeitig als Lagerplätze dienen, auf denen Dämmstoffgroßballen gelagert werden.

Das Transportsystem kann als geschlossene Kurve und/oder als eine oder mehrere gerade Strecken ausgebildet sein oder eine oder mehrere solche umfassen. Eine geschlossene Kurve kann insbesondere optional in einem Bereich die Form eines Kreisbogens umfassen. Beispielsweise kann das Transportsystem zwei halbe Kreisbögen umfassen, die durch gerade Strecken miteinander verbunden sind, oder es kann karussellförmig, insbesondere kreisförmig oder entlang einer geschlossenen ovalen oder ähnlichen geschlossenen Kurve ausgebildet sein. Es kann optional entlang der geschlossenen Kurve Parkbuchten oder Abzweigungen umfassen, auf denen Transportplätze geparkt oder angehalten werden können.

Das System kann zum Einbringen von Dämmstoffgroßballen in einen, zwei oder mehr Bevorratungssysteme ausgebildet sein. Für jedes Bevorratungssystem, an denen es einen Dämmstoffgroßballen übergeben kann, kann es insbesondere zwei, drei oder mehr Transportplätze umfassen. Dies kann insbesondere ermöglichen, dass Dämmstoffgroßballen mit für das Bevorratungssystem benötigten Dämmstoff, beispielsweise ein bestimmtes Material, sich bereits als Nachschub im Transportsystem befindet, sodass der Dämmstoff zügig zum Bevorratungssystem bewegt werden kann, wenn er dort benötigt wird. Dies kann insbesondere erlauben, das System ohne Unterbrechung zu betreiben.

Das System kann des Weiteren einen, zwei oder mehr Bevorratungssysteme, insbesondere ein, zwei oder mehr Großballenauflöser, umfassen. Alternativ oder zusätzlich zu einem oder mehr Großballenauflösern kann das System des Weiteren einen, zwei oder mehr Bunker und/oder Zwischenbunker umfassen.

Zwei oder mehr Bevorratungssysteme können beispielsweise an einem Kreisbogen des Transportsystems mit gleichem Abstand vom Kreismittelpunkt des Kreisbogens angeordnet sein. Der Winkel zwischen zwei nebeneinanderstehenden Bevorratungssystemen kann beispielswiese zwischen 10° und 180°, z.B. zwischen 45° und 135°, z.B. zwischen 60° und 120° betragen. Das System kann für jedes Bevorratungssystem eine eigene Übergabestelle umfassen.

Optional kann eine Übergabevorrichtung zur Übergabe der Dämmstoffgroßballen vom Transportsystem an ein Bevorratungssystem für zwei oder mehr Übergabestellen gleichzeitig ausgebildet sein. Beispielsweise eine Übergabevorrichtung, insbesondere ein Ausstoßer der Übergabevorrichtung, in der Nähe von zwei Übergabestellen, z.B. am Kreismittelpunkt des Kreisbogens, drehbar angeordnet sein, so dass er zu zwei oder mehr Bevorratungssystemen gedreht werden kann. Dies kann ermöglichen, die gleiche Übergabevorrichtung, insbesondere den gleichen Ausstoßer, für verschiedene Bevorratungssysteme zu verwenden.

Alternativ oder zusätzlich können zwei oder mehr Bevorratungssysteme beispielsweise nebeneinander, insbesondere entlang einer Geraden, angeordnet sein. Das System kann für jedes Bevorratungssystem eine eigene Übergabestelle umfassen. Optional kann eine Übergabevorrichtung zur Übergabe der Dämmstoffgroßballen vom Transportsystem an ein Bevorratungssystem für zwei oder mehr Übergabestellen gleichzeitig ausgebildet sein. Beispielsweise kann die Übergabevorrichtung, z.B. ein Ausstoßer oder ein Lastaufnahmemittel für Paletten, entlang einer Geraden verfahrbar angeordnet sein, so dass sie (je nach Übergabevorrichtung mit oder ohne Dämmstoffgroßballen) zu zwei oder mehr nebeneinanderliegenden Bevorratungssystemen bewegt werden kann. Dies kann ermöglichen, die gleiche Übergabevorrichtung für verschiedene Bevorratungssysteme zu verwenden.

In anderen Ausführungsformen kann für jede Übergabestelle eines Bevorratungssystems eine Übergabevorrichtung umfasst sein, oder das System kann einen oder mehrere Übergabevorrichtungen umfassen, von denen jede für die Übergabestelle an einem Bevorratungssystem vorgesehen sein kann oder zu den Übergabestellen von zwei oder mehr Bevorratungssystem bewegbar sein kann. Alternativ oder zusätzlich kann das System eine oder mehrere Übergabestellen umfassen, von denen jeweils Dämmstoffgroßballen durch die Übergabevorrichtung aufgenommen und dann an ein oder ein auswählbares von mehreren Bevorratungssystemen übergeben werden kann.

Zudem kann ein zuvor beschriebenes System zum Einbringen von Dämmstoffgroßballen eine Steuerung umfassen, die dazu ausgebildet ist, die folgenden Schritte durchzuführen:
- Erhalten einer Information über den Dämmstoffgroßballen und Speicherung der Information über den Dämmstoffgroßballen in einer Lagerverwaltungssoftware,
- Erhalten einer Anfrage nach einem Dämmstoffgroßballen oder Abrufen des Zustands eines Bevorratungssystems und Bestimmen, dass ein Dämmstoffgroßballen benötigt wird,
- Überprüfen, ob ein Dämmstoffgroßballen im Transportsystem vorhanden ist,
- Steuern des Transportsystems, so dass der Dämmstoffgroßballen zur Übergabestelle transportiert wird,
- Steuern der Übergabevorrichtung zur Übergabe des Dämmstoffgroßballens vom Transportsystem an ein Bevorratungssystem,
- Aktualisieren der Lagerverwaltungssoftware.

Die vorher beschriebenen Schritte können, müssen aber nicht in der oben angegebenen Reihenfolge durchgeführt werden. Sie können insbesondere auch in anderer Reihenfolge durchgeführt werden.

Der Schritt "Erhalten einer Information über den Dämmstoffgroßballen und Speicherung der Information über den Dämmstoffgroßballen in einer Lagerverwaltungssoftware" kann vor, beim oder direkt nach dem Zuführen eines Dämmstoffgroßballens in das Transportsystem durchgeführt werden. Er kann beispielsweise durch Erhalten einer manuellen Eingabe oder ein automatisches Erkennen eines Etiketts, Labels oder Signals oder ein sonstiges Erfassen einer Information über den Dämmstoffgroßballen, z.B. seiner Existenz und/oder Position im Transportsystem, durchgeführt werden. Insbesondere kann dabei eine oder mehrere Eigenschaften des Dämmstoffgroßballen erfasst und gespeichert werden. Insbesondere kann also beim Erhalten einer Information über den Dämmstoffgroßballen und Speicherung einer Information über den Dämmstoffgroßballen in einer Lagerverwaltungssoftware mindestens eine Eigenschaft des Dämmstoffgroßballens erhalten und gespeichert werden. Beispielsweise kann in der Lagerverwaltungssoftware die Position des Dämmstoffgroßballens im Transportsystem und eine Eigenschaft des Dämmstoffgroßballens, beispielsweise das Material des Dämmstoffs, erfasst und gespeichert werden. Beispielsweise kann eine Information über den Dämmstoffgroßballen, beispielsweise die Art des Dämmstoffs, über einen Farbcode oder eine Farbcodierung oder mittels Barcode oder QR-Code eingelesen werden.

Das System zum Einbringen von Dämmstoffgroßballen in Bevorratungssystem, insbesondere seine Steuerung, kann eine Lagerverwaltungssoftware umfassen. Die Lagerverwaltungssoftware kann so ausgebildet sein, dass sie für jeden Transportplatz mindestens eine Eigenschaft speichert, z.B. für jeden Transportplatz die Information gespeichert hat, ob dort einem Dämmstoffgroßballen vorhanden ist oder nicht und optional, aus welchem Material dieser Dämmstoffgroßballen ausgebildet ist. Dieses kann insbesondere erlauben, für ein oder mehrere mit verschiedenen Dämmstoffen zu befüllende Bevorratungssysteme jeweils automatisch, rechtzeitig und effizient das richtige Material bereitzustellen. Dies kann, insbesondere bei Verwendung eines oder mehrerer Bevorratungssysteme mit einem oder mehreren Dämmstoffen, einen durchgehenden Betrieb ohne Unterbrechungen aufgrund der notwendigen Versorgung der Bevorratungssysteme mit Dämmstoff ermöglichen.

Wenn die Steuerung des Transportsystems eine Anfrage nach einem Dämmstoffgroßballen erhält, kann die Anfrage eine bestimmte Eigenschaft des benötigten Dämmstoffgroßballens angeben, z.B. das benötigte Material des Dämmstoffgroßballens. Alternativ oder zusätzlich kann, wenn der Zustand eines Bevorratungssystems abgefragt und bestimmt wird, dass ein Dämmstoffgroßballen benötigt wird, optional eine bestimmte Eigenschaft des benötigten Dämmstoffgroßballens abgerufen werden, beispielsweise das Material des Dämmstoffgroßballens.

Die Steuerung kann, insbesondere anhand der Lagerverwaltungssoftware, überprüfen, ob ein Dämmstoffgroßballen im Transportsystem vorhanden ist, wobei optional beim Überprüfen, ob ein Dämmstoffgroßballen im Transportsystem vorhanden ist, überprüft wird, ob ein Dämmstoffgroßballen mit der bestimmten Eigenschaft im Transportsystem vorhanden ist.

Wenn ein Dämmstoffgroßballen, insbesondere mit der bestimmten Eigenschaft, im Transportsystem vorhanden ist, kann durch die Steuerung, insbesondere unter Verwendung der Lagerverwaltungssoftware, festgestellt werden, auf welchen Transportplatz sich ein Dämmstoffgroßballen, insbesondere ein Dämmstoffgroßballen mit einer bestimmten Eigenschaft, befindet.

Die Steuerung kann das Transportsystem so steuern, dass der Dämmstoffgroßballen, insbesondere der Dämmstoffgroßballen mit einer bestimmten Eigenschaft, zur Übergabestelle transportiert wird. Beispielsweise kann die Steuerung Instruktionen erzeugen und an das Transportsystem übermitteln, die, wenn sie durch das Transportsystem ausgeführt werden, dazu führen, dass das Transportsystem den Dämmstoffgroßballen, insbesondere den Dämmstoffgroßballen mit einer bestimmten Eigenschaft, zur Übergabestelle transportiert.

Anschließend kann die Steuerung des Systems die Übergabevorrichtung zur Übergabe des Dämmstoffgroßballens vom Transportsystem an ein Bevorratungssystem steuern. Die Steuerung kann insbesondere Instruktionen erzeugen und an die Übergabevorrichtung schicken, die die Übergabevorrichtung veranlassen, eine Übergabe des Dämmstoffgroßballens vom Transportsystem an ein Bevorratungssystem, insbesondere die im Folgenden beschriebenen Schritte, durchzuführen.

Insbesondere kann die Steuerung des Systems den Ausstoßer so steuern, dass der Großballen durch einen Ausstoßer vom Transportplatz in ein Bevorratungssystem bewegt werden. Optional kann davor, wenn mehrere Bevorratungssysteme umfasst sind und der Ausstoßer für zwei oder mehr Bevorratungssysteme gleichzeitig ausgebildet ist, die Steuerung den Ausstoßer so steuern, dass er zum Bevorratungssystem bewegt, beispielsweise gedreht, wird, in den gerade ein Dämmstoffgroßballen eingebracht werden soll.

Wenn die Übergabevorrichtung ein Lastaufnahmemittel für Paletten ist, kann die Steuerung des Systems das Lastaufnahmemittel für Paletten so steuern (oder Instruktionen erzeugen und an das Lastaufnahmemittel schicken, die dazu führen), dass es zu einer Übergabestelle bewegt wird, an der ein Dämmstoffgroßballen, insbesondere ein Dämmstoffgroßballen mit einer bestimmten Eigenschaft, liegt, den Dämmstoffgroßballen an dem Transportplatz aufnimmt und dann zu dem Bevorratungssystem bewegt wird und dort den Dämmstoffgroßballen an das Bevorratungssystem übergibt.

Anschließend wird die Lagerverwaltungssoftware aktualisiert, also insbesondere in der Lagerverwaltungssoftware vermerkt, dass der gerade aus dem Transportsystem entfernte und/oder in das Bevorratungssystem übergebene Dämmstoffgroßballen aus dem Transportsystem entfernt wurde.

Typischerweise wird der Dämmstoffgroßballen vor dem Zuführen in das Transportsystem an einer Lagerstelle in die Nähe des Transportsystems hin transportiert, beispielsweise per Gabelstapler. Insbesondere kann der Dämmstoffgroßballen an eine außerhalb des Transportsystems in der Nähe der Zuführstelle liegende Lagerstelle gebracht werden, die optional vom System zum Einbringen von Dämmstoffgroßballen in ein Bevorratungssystem umfasst sein kann.

Optional kann die Steuerung des Systems eine Anfrage erhalten, dass ein anderer Dämmstoffgroßballen in einem Bevorratungssystem benötigt wird oder bestimmen, dass ein anderer Dämmstoffgroßballen benötigt wird, als im Bevorratungssystem vorhanden ist. Damit kann die Steuerung insbesondere bestimmen, dass ein Dämmstoffgroßballen (oder noch verbleibende Teile davon) aus dem Bevorratungssystem entfernt werden sollen.

Alternativ kann die Steuerung des Systems eine Anfrage erhalten, dass ein Dämmstoffgroßballen (oder noch verbleibende Teile davon) aus einem Bevorratungssystem entfernt werden soll oder bestimmen, dass ein Dämmstoffgroßballen (oder noch verbleibenden Teile davon) aus dem Bevorratungssystem entfernt werden soll.

Optional kann dann die Steuerung des Systems die Übergabevorrichtung so steuern, dass der im Bevorratungssystem vorhandene Dämmstoffgroßballen (oder noch verbleibende Teile davon) aus dem Bevorratungssystem entfernt wird. Optional kann die Steuerung die Übergabevorrichtung so steuern, dass der im System vorhandene Dämmstoffgroßballen oder noch verbleibenden Teile davon an einen Transportplatz, z.B. auf einer Lagerstrecke, übergeben wird.

Die Steuerung des Systems kann eine Anfrage erhalten, dass eine leere Palette aus einem Bevorratungssystem entfernt werden soll oder bestimmen, dass eine leere Palette aus einem Bevorratungssystem entfernt werden soll. Optional kann die Steuerung die Übergabevorrichtung so steuern, dass die leere Palette an einen Transportplatz, z.B. auf einer Lagerstrecke, oder an ein Palettenablage übergeben wird. Eine, optional vom System umfasste, Palettenablage kann insbesondere als automatischer Paletten-Stapler ausgebildet sein oder einen solchen umfassen.

Wenn die Steuerung des Systems eine Anfrage erhalten hat, dass ein anderer Dämmstoffgroßballen in einem Bevorratungssystem benötigt wird oder bestimmt hat, dass ein anderer Dämmstoffgroßballen benötigt wird, als im Bevorratungssystem vorhanden ist, kann sie nach dem Entfernen des Dämmstoffgroßballens oder der verbleibenden Teile davon optional das System so steuern, dass der andere Dämmstoffgroßballen zur Übergabestelle transportiert wird, und die Übergabevorrichtung zur Übergabe des Dämmstoffgroßballens den Dämmstoffgroßballen vom Transportsystem an ein Bevorratungssystem übergibt.

Die Steuerung kann die Lagerverwaltungssoftware nach jedem Schritt, der den Zustand des Lagersystems ändert, insbesondere jedem Übergabeschritt von Dämmstoffgroßballen (oder verbleibenden Teilen davon) an ein Bevorratungssystem oder vom Bevorratungssystem an das Transportsystem, entsprechend aktualisieren.

Vor dem Zuführen kann der Dämmstoffgroßballen, optional an der Lagerstelle, entpackt werden. Dies kann manuell oder, in einigen Ausführungsformen des Systems, durch an der Lagerstelle umfasste Mittel zum Entpacken eines Dämmstoffgroßballens vorgenommen werden.

Die Erfindung umfasst des Weiteren ein Verfahren zum Steuern eines Systems zum Einbringen von Dämmstoffgroßballen in ein Bevorratungssystem, insbesondere eines zuvor beschriebenen Systems zum Einbringen von Dämmstoffgroßballen in ein Bevorratungssystem, das einen, mehrere oder jeden der zuvor beschriebenen Schritte umfassen kann, die die Steuerung durchführen kann.

Die Erfindung umfasst zudem eine Steuerung zum Steuern eines Systems zum Einbringen von Dämmstoffgroßballen in ein Bevorratungssystem, insbesondere ein System wie zuvor beschrieben, die computerlesbare Daten umfasst, die, wenn sie mit einem Prozessor ausgeführt werden, das System steuern, die oben beschriebenen Schritte durchführen. Die Steuerung kann insbesondere die Schritte durchführen, die eine zuvor beschriebene Steuerung durchführen kann.

Die Erfindung umfasst zudem ein Verfahren zum Einbringen von Dämmstoffgroßballen in ein Bevorratungssystem, insbesondere mit einem System wie zuvor beschrieben, das ein Zuführen von Dämmstoffgroßballen in ein Transportsystem und eine Übergabe eines Dämmstoffgroßballens vom Transportsystem an ein Bevorratungssystem umfasst, wobei das Verfahren optional einen, mehrere oder jeden der zuvor beschriebenen Schritte umfassen kann.

Weitere mögliche Details eines Systems und zugehörigen Verfahrens wird im Folgenden anhand der Figur erklärt. Hierbei zeigt
Figur 1 schematisch ein System zum Einbringen von Dämmstoffgroßballen in ein Bevorratungssystem
Figur 2 schematisch ein System zum Einbringen von Dämmstoffgroßballen in ein Bevorratungssystem
Figur 3 schematisch ein System zum Einbringen von Dämmstoffgroßballen in ein Bevorratungssystem
Figur 4 schematisch ein System zum Einbringen von Dämmstoffgroßballen in ein Bevorratungssystem in Seitenansicht.

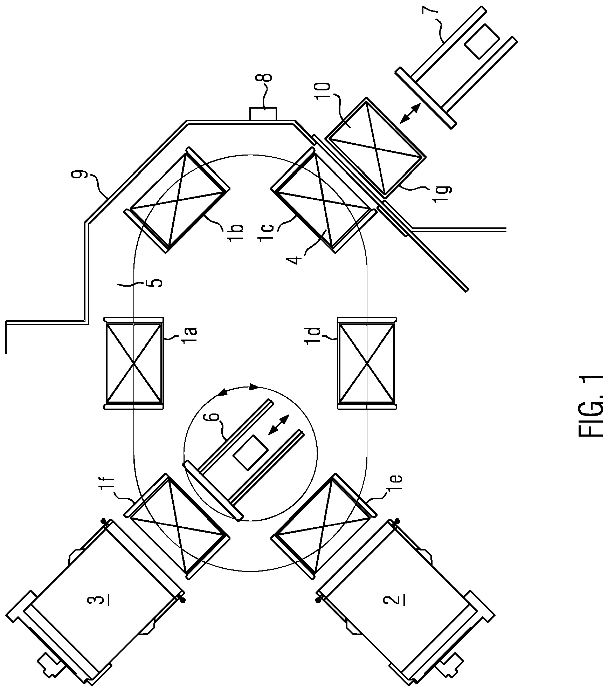

Im System zum Einbringen von Dämmstoffgroßballen in ein Bevorratungssystem, beispielsweise einen Großballenauflöser, aus Figur 1 sind zur Verdeutlichung der Funktionen Dämmstoffgroßballen 1a bis 1g eingezeichnet, die jedoch vom System nicht umfasst sind.

Das in Figur 1 gezeigte System zum Einbringen von Dämmstoffgroßballen zeigt hier beispielhaft Dämmstoffgroßballen 1a bis 1f an verschiedenen Transportplätzen. In der gezeigten Ausführungsform sind beispielhaft alle Transportplätze des Systems durch Dämmstoffgroßballen 1a bis 1f belegt.

Dämmstoffgroßballen 1g befindet sich an Lagerstelle 10 und kann durch Zuführvorrichtung 7 auf den nächsten freien Transportplatz des Transportsystems bewegt werden, der an der Position, wo jetzt Dämmstoffgroßballen 1c eingezeichnet ist, an der Zuführstelle zum Stehen kommt. Die Steuerung von Zuführvorrichtung 7 kann manuell durch einen Bediener oder durch das Steuerungssystem, z.B. aufgrund einer Eingabe oder eines automatischen Erkennens des Dämmstoffgroßballens, erfolgen.

Dämmstoffgroßballen 1g kann beispielhaft durch einen Bediener, beispielsweise aus einem Lager, durch einen Gabelstapler oder Ähnliches an die Lagerstelle 10 gebracht worden sein. Optional (hier nicht gezeigt) kann das System an der Lagerstelle 10 Mittel zum Entpacken eines Dämmstoffgroßballens umfassen, durch den ein an der Lagerstelle 10 befindlicher Dämmstoffgroßballen 1g entpackt werden kann.

Vor, beim oder nach dem Zuführen kann optional eine Information über den Dämmstoffgroßballen von einer Steuerung des Systems erhalten und/oder erfasst werden und in einer Lagerverwaltungssoftware gespeichert werden. Beispielsweise kann die Information über den Dämmstoffgroßballen 1g vom Bediener in eine Konsole 8 eingegeben und dadurch von System erfasst werden. In anderen Ausführungsformen (hier nicht gezeigt), kann die Information über den Dämmstoffgroßballen über ein automatisches Erkennen von Eigenschaften, beispielsweise unter Verwendung von einer oder mehreren Kameras des Transportsystems oder ähnlichem, Scannen eines Etiketts, oder ähnliches erfolgen.

Beispielhaft zeigt das System zwei Bevorratungssysteme 2, 3, die vom System umfasst sein können, aber nicht müssen. Diese Bevorratungssysteme können mit den gleichen oder verschiedenen Dämmstoffmaterialien betrieben werden. In anderen Ausführungsformen (hier nicht gezeigt), kann das System für einen oder mehr als zwei Bevorratungssysteme ausgebildet sein, die es optional umfassen kann (aber nicht muss).

Das System umfasst in dem gezeigten Beispiel für jedes Bevorratungssystem 2, 3 eine eigene Übergabestelle. Hierbei befindet sich Dämmstoffgroßballen 1e an den Übergabestellen für Bevorratungssystem 2 und Dämmstoffgroßballen 1f an der Übergabestelle für Bevorratungssystem 3. In anderen Ausführungsformen kann eine Übergabestelle für mehr als ein Bevorratungssystemvorgesehen sein (nicht gezeigt).

Transportsystem 5 ist hier beispielhaft als geschlossene Kurve (Karussell) ausgebildet, wobei die Kurve beispielhaft im Bereich, wo die Bevorratungssysteme 2, 3 angeordnet sind, die Form eines Kreisbogens aufweist. In anderen Ausführungsformen kann das Transportsystem andere geschlossenen Formen aufweisen und/oder nicht als geschlossene Kurve ausgebildet sein. Das Transportsystem kann alternativ oder zusätzlich weitere Bauteile, z.B. Parkbucht(en), Lagerstrecke(n) oder ähnliches, umfassen.

Übergabevorrichtung 6 ist hier beispielhaft im Kreismittelpunkt des Kreisbogens drehbar angeordnet. In anderen Ausführungsformen (hier nicht gezeigt), kann für jedes Bevorratungssystem eine eigene Übergabevorrichtung umfasst sein und/oder die Übergabevorrichtung nicht drehbar ausgebildet sein. Die beispielhafte Übergabevorrichtung 6, hier beispielhaft in Form eines drehbaren Ausstoßers, ist hier so einstellbar, dass mit ihr Dämmstoffgroßballen 1e an Bevorratungssystem 2 und Dämmstoffgroßballen 1f an Bevorratungssystem 3 übergeben werden kann, insbesondere mit dem Ausstoßer Dämmstoffgroßballen 1e in Bevorratungssystem 2 und Dämmstoffgroßballen 1f in Bevorratungssystem 3 ausgestoßen werden kann.

Optional kann das System eine Schutzabdeckung 9 umfassen, die sich um einen Teilbereich oder um das gesamte Transportsystem (hier nicht gezeigt) erstrecken kann. Beispielhaft ist hier eine Schutzabdeckung 9 umfasst, die sich um einen Teil des Transportsystems erstreckt und diesem von einem Raum trennt, in dem sich Bediener des Systems (Menschen) aufhalten. In der Schutzabdeckung 9 ist beispielhaft eine Öffnung vorgesehen, durch die ein Dämmstoffgroßballen von Lagerstelle 10 in das Transportsystem 5 zugeführt werden kann. Diese Öffnung kann optional durch eine, insbesondere verschiebbare oder anderweitig bewegbare, Tür oder Abdeckung verschlossen sein oder werden, wenn gerade kein Dämmstoffgroßballen in das Transportsystem zugeführt werden soll. Somit kann im System auftretender Dämmstoffstaub im System gehalten werden.

In dem beispielhaft gezeigten System umfasst das Transportsystem drei Transportplätze pro Bevorratungssystem. In anderen Ausführungsformen kann es pro Bevorratungssystem auch mehr oder weniger Transportplätze umfassen.

Das Transportsystem kann beispielsweise eine Elektrohängebahn oder eine Rollenbahn umfassen. Die Transportplätze können einzeln angetrieben und individuell steuerbar sein, ein Transportplatz kann beispielsweise in Form eines Gehänges bei einer Elektrohängebahn oder einer Transportplatte oder Platz dafür auf einer Rollenbahn oder einem Kettenförderer ausgebildet sein (hier nicht gezeigt).

Die Dämmstoffgroßballen 1a bis 1g können das gleiche oder verschiedene Dämmstoffmaterialien umfassen; das System kann also insbesondere so ausgebildet sein, dass die Steuerung, insbesondere in einer Lagerverwaltungssoftware, die Position und das Material der Dämmstoffgroßballen speichert. Die Steuerung kann, z.B. auf Anfrage nach einem Dämmstoffgroßballen, insbesondere mit einem bestimmten Material, oder Abrufen des Zustands eines Bevorratungssystems und Bestimmen, dass ein Dämmstoffgroßballen mit einem bestimmten Material benötigt wird, dann das Transportsystem so steuern, dass ein Dämmstoffgroßballen mit dem bestimmten Material zu der Übergabestelle des Bevorratungssystems transportiert wird und vom Transportsystem an das Bevorratungssystemübergeben wird. Insbesondere kann die Steuerung dabei Instruktionen erzeugen und an das Transportsystem übermitteln, die diese veranlassen, dass ein Dämmstoffgroßballen mit dem bestimmten Material zu der Übergabestelle des Bevorratungssystems transportiert wird und vom Transportsystem an das Bevorratungssystemübergeben wird.

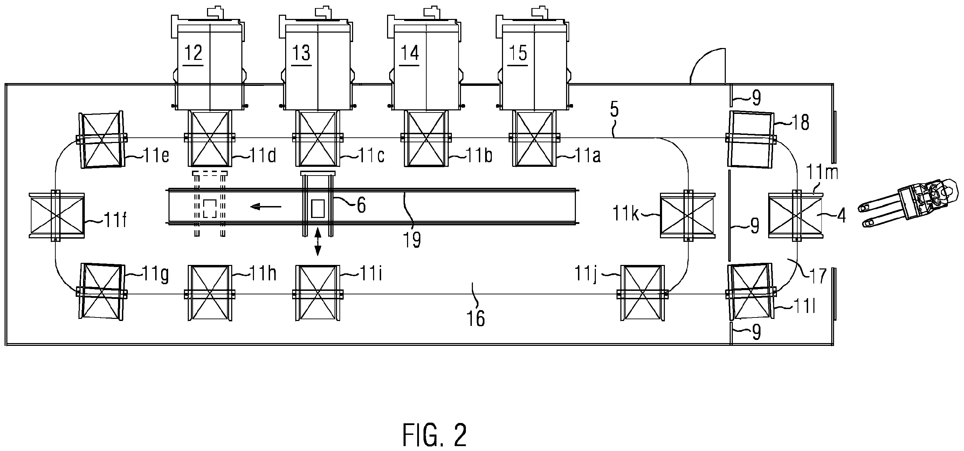

Figur 2 zeigt ebenfalls schematisch ein System zum Einbringen von Dämmstoffgroßballen in ein Bevorratungssystem. In dem gezeigten Beispiel sind beispielhaft Dämmstoffgroßballen 11a bis 11m an verschiedenen Transportplätzen gezeigt, wobei die Dämmstoffgroßballen selber nicht vom System umfasst sein müssen (aber können). Transportplatz 18 enthält beispielhaft keinen Dämmstoffgroßballen. Hierbei befinden sich Dämmstoffgroßballen 11a bis 11k im Transportteil 16 des Transportsystems und Dämmstoffgroßballen 11l bis 11m in einer Abzweigung 17 des Transportsystems, in dem die Transportplätze aus dem Transportteil 16 des Transportsystems zur Befüllung ausgeschleust werden können. Beispielsweise können in der Abzweigung 17 die Transportplätze mit einer anderen Geschwindigkeit angetrieben werden, als im Transportteil 16 des Transportsystems. Bei Antrieb durch eine Transportkette können diese z.B. (wie bei einem Sessellift) durch eine andere Kette mit anderer, insbesondere regelbarer, Geschwindigkeit angetrieben werden und/oder einzeln angehalten und bewegt werden.

An Zuführstelle 4 kann jeweils, wenn ein Transportplatz frei ist, ein Dämmstoffgroßballen in das Transportsystem zugeführt werden. Hier ist beispielhaft Dämmstoffgroßballen 11m an der Zuführstelle 4 eingezeichnet. Dieser Dämmstoffgroßballen kann in das Transportsystem z.B. manuell durch einen oder mehrere Bediener und/oder mit maschineller Hilfe, z.B. durch einen beispielhaft eingezeichneten Gabelstapler (nicht vom System umfasst), eingeführt werden.

Vor, beim oder nach dem Zuführen kann optional eine Information über den Dämmstoffgroßballen von einer Steuerung des Systems erhalten und/oder erfasst werden und in einer Lagerverwaltungssoftware gespeichert werden.

Beispielhaft zeigt das System hier vier Bevorratungssysteme 12 bis 15, die vom System umfasst sein können, aber nicht müssen. Diese Bevorratungssysteme können mit den gleichen oder verschiedenen Dämmstoffmaterialien betrieben werden. In anderen Ausführungsformen (hier nicht gezeigt), kann das System für einen, zwei, drei oder mehr als vier Bevorratungssysteme ausgebildet sein, die es optional umfassen kann (aber nicht muss).

Das System umfasst in dem gezeigten Beispiel für jedes Bevorratungssystem 12 bis 15 eine eigene Übergabestelle. Hierbei befindet sich Dämmstoffgroßballen 11a, 11b, 11c und 11d beispielhaft an den Übergabestellen für Bevorratungssysteme 12, 13, 14 und 15. In anderen Ausführungsformen kann eine Übergabestelle für mehr als einen Bevorratungssystem vorgesehen sein (nicht gezeigt).

Transportsystem 5 ist hier beispielhaft als eine geschlossene Kurve (Karussell) 16 umfassend ausgebildet, wobei die Kurve beispielhaft im Bereich, wo die Bevorratungssysteme 12 bis 15 angeordnet sind, die Form einer Geraden aufweist. Das Transportsystem 5 umfasst des Weiteren Abzweigung 17, in dem Transportplätze optional aus dem Transportbereich 16 ausgeschleust und beladen werden können.

Die Übergabevorrichtung 6 ist hier beispielhaft entlang einer Geraden 19 bewegbar, insbesondere verschiebbar, angeordnet. Somit kann sie zu den Übergabestellen der Bevorratungssysteme 12 bis 15 bewegt werden. In anderen Ausführungsformen (hier nicht gezeigt), kann für jedes Bevorratungssystem eine eigene Übergabevorrichtung umfasst sein und/oder mehrere Übergabevorrichtungen umfasst sein, die jeweils für einen oder mehrere Bevorratungssysteme ausgebildet sind, und/oder die Übergabevorrichtung drehbar ausgebildet sein.

Optional kann das System eine Schutzabdeckung 9 umfassen, die sich um einen Teilbereich oder um das gesamte Transportsystem (hier nicht gezeigt) erstrecken kann. In der Schutzabdeckung 9 sind hier beispielhaft zwei Öffnungen vorgesehen, durch die ein Dämmstoffgroßballen in den Transportbereich 16 des Transportsystems 5 zugeführt werden kann. Diese Öffnung kann optional durch eine, insbesondere verschiebbare oder anderweitig bewegbare, Tür oder Abdeckung verschlossen sein oder werden, wenn gerade kein Dämmstoffgroßballen in das Transportsystem zugeführt werden soll. Somit kann im System auftretender Dämmstoffstaub im System gehalten werden.

Die Dämmstoffgroßballen 11a bis 11m können das gleiche oder verschiedene Dämmstoffmaterialien umfassen; das System kann also insbesondere so ausgebildet sein, dass die Steuerung, insbesondere in einer Lagerverwaltungssoftware, die Position und das Material der Dämmstoffgroßballen speichert. Die Steuerung kann, z.B. auf Anfrage nach einem Dämmstoffgroßballen, insbesondere mit einem bestimmten Material, oder Abrufen des Zustands eines Bevorratungssystems und Bestimmen, dass ein Dämmstoffgroßballen mit einem bestimmten Material benötigt wird, dann das Transportsystem so steuern, dass ein Dämmstoffgroßballen mit dem bestimmten Material zu der Übergabestelle des Bevorratungssystems transportiert wird und vom Transportsystem an das Bevorratungssystem übergeben wird. Sie kann dabei insbesondere Instruktionen erzeugen und an das Transportsystem übermitteln, die diese veranlassen, die zuvor beschriebenen Schritte durchzuführen.

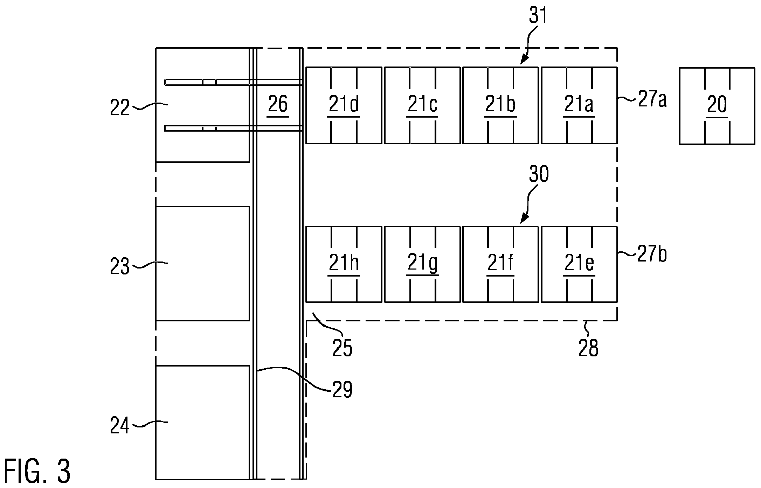

Figur 3 zeigt ebenfalls schematisch ein System zum Einbringen von Dämmstoffgroßballen in Draufsicht. In dem gezeigten Beispiel sind beispielhaft Transportplätze 21a-21h auf zwei Lagerstrecken 30, 31 eingezeichnet. Die Lagerstrecken können beispielsweise als Rollenbahnen oder Kettenförderer ausgebildet sein. In dem gezeigten Beispiel haben Lagerstrecke 30 und Lagerstrecke 31 jeweils 4 Transportplätze, auf denen Dämmstoffgroßballen, beispielhaft mit Palette; gelagert und von dort aus weiter transportiert werden können.

Die Lagerstrecken können beispielsweise Kettenförderer, Rollenförderer oder andere Förderer umfassen.

Beispielhaft umfasst jede Lagerstrecke eine Zuführstelle, wobei die Zuführstelle für Lagerstrecke 30 Transportplatz 21e und die Zuführstelle für Lagerstrecke 31 Transportplatz 21a entspricht. Wenn die entsprechenden Transportplätze frei sind, können an den Zuführstellen jeweils weitere Dämmstoffgroßballen (optional mit Palette) in das Transportsystem zugeführt werden. Wie beschrieben können Dämmstoffgroßballen in das Transportsystem z.B. manuell durch einen oder mehrere Bediener und/oder mit maschineller Hilfe, z.B. durch einen Gabelstapler oder Hubwagen (müssen nicht vom System umfasst sein), eingeführt werden.

Vor, beim oder nach dem Zuführen kann optional eine Information über den Dämmstoffgroßballen von einer Steuerung des Systems erhalten und/oder erfasst werden und in einer Lagerverwaltungssoftware gespeichert werden.

Von den jeweiligen Zuführstellen können dann Dämmstoffgroßballen im Transportsystem 25 entlang der Lagerstrecke über Transportplätze 21b, 21c und 21d (Lagerstrecke 31) bzw. 21f, 21g und 21h (Lagerstrecke 30) transportiert werden.

Eingezeichnet sind ebenfalls beispielhaft zwei Bevorratungssysteme 22, 23, die vom System umfasst sein können, aber nicht sein müssen. Diese Bevorratungssysteme können mit den gleichen oder verschiedenen Dämmstoffmaterialien betrieben werden. In anderen Ausführungsformen (hier nicht gezeigt), kann das System für eines, zwei, drei oder mehr als vier Bevorratungssysteme ausgebildet sein, die es optional umfassen kann (aber nicht muss).

Das System umfasst in dem gezeigten Beispiel zwei Übergabestellen, nämlich die Transportplätze 21d und 21h. Von diesen aus kann durch die Übergabevorrichtung 26 ein Dämmstoffgroßballen (mit Palette), aufgenommen und dann zum einem Bevorratungssystem 22, 23 transportiert werden. Hierbei ist in dem gezeigten Beispiel möglich, den Dämmstoffgroßballen von jeder Übergabestelle 21d, 21h zu jedem Bevorratungssystem 22, 23 zu bewegen, indem, falls notwendig, die Übergabevorrichtung 26 entlang dem Verfahrweg 29 mit dem Dämmstoffgroßballen bewegt wird.

Das Transportsystem 25 umfasst hier beispielhaft zwei Lagerstrecken 30, 31 mit jeweils 4 Transportplätzen 21a- 21d, 21e- 21h. In anderen Beispielen (hier nicht gezeigt), kann eine oder beide der Lagerstrecken jeweils mehr oder weniger als 4 Transportplätze umfassen, oder weniger oder mehr als zwei Lagerstrecken umfasst sein.

Die Übergabevorrichtung 26 ist hier beispielhaft entlang einem Verfahrweg 29 in Form einer Geraden bewegbar, insbesondere verschiebbar, angeordnet. Somit kann sie, beispielsweise auf einem Verfahrwagen, zu den Übergabestellen der Bevorratungssysteme 22, 23 bewegt werden. In dem gezeichneten Beispiel kann die Übergabevorrichtung 26 beispielsweise als eine Teleskopgabel ausgebildet sein, die so ausgerichtet ist, dass sie an der eingezeichneten Position sowohl einen Dämmstoffgroßballen (auf einer Palette) von Transportplatz 21 d aufnehmen kann und diesen (samt Palette) in das Bevorratungssystem 22 oder, nach einer Bewegung mit dem Dämmstoffgroßballen (auf einer Palette) entlang des Verfahrwegs 29, in das Bevorratungssystem 23, einbringen kann. Ebenso kann ein Dämmstoffgroßballen von Transportplatz 21h in Bevorratungssystem 22 oder 23 eingebracht werden.

In anderen Ausführungsformen (hier nicht gezeigt), kann für jedes Bevorratungssystem eine eigene Übergabevorrichtung umfasst sein und/oder mehrere Übergabevorrichtungen umfasst sein, die jeweils für einen oder mehrere Bevorratungssysteme ausgebildet sind, und/oder die Übergabevorrichtung drehbar ausgebildet sein.

Optional kann eine Lagerstelle 20 vorgesehen sein, an der ein Dämmstoffgroßballen insbesondere entpackt werden kann. Dieses Entpacken kann insbesondere manuell oder automatisch erfolgen.

Ebenfalls eingezeichnet ist optional umfasste Schutzabdeckung 28, die sich wie gezeigt um das gesamte Transportsystem erstrecken kann, oder nur einen Teil davon (hier nicht gezeigt). In der Schutzabdeckung 28 sind hier beispielhaft zwei Öffnungen 27a, 27b vorgesehen, durch die ein Dämmstoffgroßballen in das Transportsystem 25 zugeführt werden kann. Jede dieser Öffnungen kann optional durch eine, insbesondere verschiebbare oder anderweitig bewegbare, Tür oder Abdeckung verschlossen sein oder werden, wenn gerade kein Dämmstoffgroßballen in das Transportsystem zugeführt werden soll. Somit kann im System auftretender Dämmstoffstaub im System gehalten werden.

Eingezeichnet ist ebenfalls eine optional vorhanden Palettenablage 24, an der leere Paletten von der Übergabevorrichtung 26 abgelegt werden können.

Die Dämmstoffgroßballen 21a - 21h können das gleiche oder verschiedene Dämmstoffmaterialien umfassen; beispielsweise können im Betrieb auf einer Lagerstrecke jeweils Dämmstoffgroßballen aus dem gleichen Dämmstoff gelagert werden oder aus verschiedenen Dämmstoffen. Das System kann so ausgebildet sein, dass die Steuerung, insbesondere in einer Lagerverwaltungssoftware, die Position und das Material der Dämmstoffgroßballen speichert. Die Steuerung kann, z.B. auf Anfrage nach einem Dämmstoffgroßballen, insbesondere mit einem bestimmten Material, oder Abrufen des Zustands eines Bevorratungssystems und Bestimmen, dass ein Dämmstoffgroßballen mit einem bestimmten Material benötigt wird, dann das Transportsystem so steuern, dass ein Dämmstoffgroßballen mit dem bestimmten Material zu einer Übergabestelle des Bevorratungssystems transportiert wird, und, typischerweise unter Verwendung der Übergabevorrichtung, an das Bevorratungssystem übergeben wird, das den Dämmstoffgroßballen benötigt. In einem System, in dem pro Lagerstrecke jeweils nur Dämmstoffgroßballen aus dem gleichen Dämmstoff gelagert werden, kann dies entsprechend im der Lagerverwaltungssoftware hinterlegt sein. Wird nun ein bestimmter Dämmstoff benötigt und angefragt, kann das Transportsystem insbesondere so gesteuert werden, dass der Dämmstoffgroßballen auf der Lagerstrecke an die Übergabestelle der jeweiligen Lagerstrecke bewegt wird, dort von der Übergabevorrichtung aufgenommen wird und dann, nach einem optionalen Transport entlang des eingezeichneten Verfahrwegs, an das Bevorratungssystem übergeben wird, dass einen entsprechenden Dämmstoffgroßballen benötigt.

Anschließend, wenn der Dämmstoffgroßballen vom Bevorratungssystem verwendet wurde, kann die Steuerung optional die Übergabevorrichtung so steuern, also insbesondere Instruktionen erzeugen und an die Übergabevorrichtung schicken, die diese veranlassen, dass sie die (leere) Palette aus dem Bevorratungssystem aufnimmt und entlang des Verfahrwegs auf eine Palettenablage 24 bringt. Die Palettenablage 24 ist hier beispielhaft auf der gleichen Seite des Verfahrwegs angeordnet wie die Bevorratungssysteme 22, 23. In anderen Ausführungsformen kann sie aber auch auf der anderen Seite des Verfahrwegs oder, beispielsweise bei einem nicht geraden Verfahrweg oder einer drehbaren Übergabevorrichtung, beispielsweise am Kopfende des Verfahrwegs oder anders angeordnet sein. Insbesondere kann die Palettenablage 24 beispielsweise auf einer Vorrichtung zum Abtransport der Paletten angeordnet sein oder ein Stapeln der Paletten ermöglichen. Insbesondere kann eine Palettenablage 24 einen automatischen Paletten-Stapler umfassen oder als solcher ausgebildet sein.

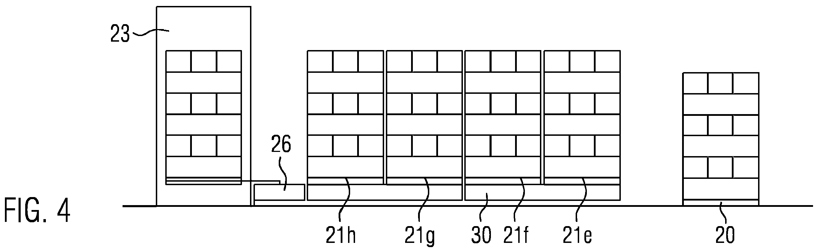

Figur 4 zeigt beispielhaft eine schematische Seitenansicht eines Systems zum Einbringen von Dämmstoffgroßballen in ein Bevorratungssystem ohne, wie man sie beispielsweise erhalten könnte bei einem System wie in Figur 3 ohne Schutzabdeckung 28. Entsprechende Komponenten wie in Figur 3 tragen die gleichen Referenzzeichen.

In Figur 4 befindet sich ein Dämmstoffgroßballen auf Lagerstelle 20. Dort kann beispielsweise ein Dämmstoffgroßballen entpackt und danach in das Transportsystem überführt werden. Ebenfalls in der Ansicht sichtbar sind Dämmstoffgroßballen auf den Lagerplätzen 21 e - 21h, die auf Lagerstrecke 30 auf Paletten gelagert sind. Im Betrieb kann es auch vorkommen, dass auf einer Lagerstrecke weniger als alle Lagerplätze belegt sind. Ebenfalls eingezeichnet ist schematisch ein Bevorratungssystem, insbesondere Großballenauflöser, 23, in dem ebenfalls ein Dämmstoffgroßballen auf einer Palette ist. Übergabevorrichtung 26 ist ebenfalls eingezeichnet.

## Patentansprüche

1. System zum Einbringen von Dämmstoffgroßballen (1a bis 1f, 21a bis 21h) in ein Bevorratungssystem, insbesondere einen Großballenauflöser (2, 3, 12 bis 15, 22, 23), umfassend:
eine Zuführstelle (4, 21a, 21e) zum Zuführen von Dämmstoffgroßballen (1a, 1f) in ein Transportsystem (5, 25),
wobei das Transportsystem (5, 25) zum Transportieren von einem Dämmstoffgroßballen von der Zuführstelle (4, 21a, 21e) zu einer Übergabestelle ausgebildet ist und mehrere Transportplätze für Dämmstoffgroßballen (1a bis 1f, 21a bis 21h) umfasst,
eine Übergabevorrichtung (6, 26) zur Übergabe eines Dämmstoffgroßballens (1a bis 1f, 21a bis 21h) von der Übergabestelle des Transportsystems (5, 25) an das Bevorratungssystem.

2. System nach Anspruch 1, des Weiteren umfassend:
eine Zuführvorrichtung (7) zum Zuführen von einem Dämmstoffgroßballen in das Transportsystem an der Zuführstelle, wobei die Zuführvorrichtung optional einen Ausstoßer umfasst.

3. System nach einem der vorhergehenden Ansprüche, wobei die Übergabevorrichtung (6, 26) einen Ausstoßer umfasst.

4. System nach einem der vorhergehenden Ansprüche, wobei die Übergabevorrichtung (6, 26) ein Lastaufnahmemittel für Paletten, insbesondere eine Teleskopgabel, umfasst.

5. System nach einem der vorhergehenden Ansprüche, wobei die Übergabevorrichtung (6, 26) bewegbar, insbesondere drehbar und/oder verschiebbar, ist.

6. System nach einem der vorhergehenden Ansprüche, wobei das Transportsystem (5, 25) eine Elektrohängebahn und/oder eine Rollenbahn und/oder einen Kettenförderer umfasst.

7. System nach einem der vorhergehenden Ansprüche, wobei das Transportsystem (5, 25) als geschlossene Kurve ausgebildet ist, die optional in einem Bereich einen Kreisbogen umfassen kann.

8. System nach einem der vorhergehenden Ansprüche, wobei das Transportsystem (5, 25) eine, zwei oder mehr Lagerstrecken (30, 31) umfasst.

9. System nach einem der vorhergehenden Ansprüche, wobei das System für jedes Bevorratungssystem, insbesondere jeden Großballenauflöser (2, 3, 12-15, 22, 23), an den es einen Dämmstoffgroßballen übergeben kann, zwei, drei oder mehr Transportplätze umfasst.

10. System nach einem der vorhergehenden Ansprüche, wobei das System des Weiteren ein Bevorratungssystem, insbesondere einen Großballenauflöser (2, 3, 12-15, 22, 23) umfasst.

11. System nach einem der vorhergehenden Ansprüche, wobei das System des Weiteren eine Steuerung umfasst, die dazu ausgebildet ist, die folgenden Schritte durchzuführen:
- Erhalten einer Information über einen Dämmstoffgroßballen und Speicherung der Information über den Dämmstoffgroßballen in einer Lagerverwaltungssoftware,
- Erhalten einer Anfrage nach einem Dämmstoffgroßballen oder Abrufen des Zustands eines Bevorratungssystems, insbesondere Großballenauflösers, und Bestimmen, dass ein Dämmstoffgroßballen benötigt wird,
- Überprüfen, ob ein Dämmstoffgroßballen im Transportsystem vorhanden ist,
- Steuern des Transportsystems, so dass der Dämmstoffgroßballen zur Übergabestelle transportiert wird,
- Steuern der Übergabevorrichtung zur Übergabe des Dämmstoffgroßballens von der Übergabestelle des Transportsystems an ein Bevorratungssystem, insbesondere einen Großballenauflöser,
- Aktualisieren der Lagerverwaltungssoftware.

12. System nach Anspruch 11,
wobei beim Erhalten einer Information über den Dämmstoffgroßballen und Speicherung der Information über den Dämmstoffgroßballen in einer Lagerverwaltungssoftware mindestens eine Eigenschaft des Dämmstoffgroßballens, beispielsweise das Material, erfasst und gespeichert wird, und/oder
wobei beim Erhalten einer Anfrage nach einem Dämmstoffgroßballen die Anfrage eine bestimmte Eigenschaft des benötigten Dämmstoffgroßballens angibt, oder beim Abrufen des Zustands eines Bevorratungssystems, insbesondere Großballenauflösers, und Bestimmen, dass ein Dämmstoffgroßballen benötigt wird, eine bestimmte Eigenschaft des benötigten Dämmstoffgroßballens abgerufen wird, und/oder
wobei beim Überprüfen, ob ein Dämmstoffgroßballen im Transportsystem vorhanden ist, überprüft wird, ob ein Dämmstoffgroßballen mit der bestimmten Eigenschaft im Transportsystem vorhanden ist.

13. Verfahren zum Steuern eines Systems zum Einbringen von Dämmstoffgroßballen in ein Bevorratungssystem, insbesondere einen Großballenauflöser, insbesondere eines Systems nach einem der vorhergehenden Ansprüche, wobei das Verfahren die folgenden Schritte umfasst:
- Erhalten einer Information über den Dämmstoffgroßballen und Speicherung der Information über den Dämmstoffgroßballen in einer Lagerverwaltungssoftware,
- Erhalten einer Anfrage nach einem Dämmstoffgroßballen oder Abrufen des Zustands eines Bevorratungssystems, insbesondere Großballenauflösers, und Bestimmen, dass ein Dämmstoffgroßballen benötigt wird,
- Überprüfen, ob ein Dämmstoffgroßballen im Transportsystem vorhanden ist,
- Steuern des Transportsystems, so dass der Dämmstoffgroßballen zur Übergabestelle transportiert wird, insbesondere Erzeugen von Instruktionen und Übermitteln derselben an das Transportsystem, die das Transportsystem veranlassen, den Dämmstoffgroßballen zur Übergabestelle zu transportieren;
- Steuern der Übergabevorrichtung zur Übergabe des Dämmstoffgroßballens von der Übergabestelle des Transportsystems an ein Bevorratungssystem, insbesondere einen Großballenauflöser, insbesondere Erzeugen von Instruktionen und Übermitteln derselben, die die Übergabevorrichtung zur Übergabe des Dämmstoffgroßballens von der Übergabestelle des Transportsystems veranlassen;
- Aktualisieren der Lagerverwaltungssoftware
wobei optional beim Erhalten einer Information über den Dämmstoffgroßballen und Speicherung der Information über den Dämmstoffgroßballen in einer Lagerverwaltungssoftware mindestens eine Eigenschaft des Dämmstoffgroßballens, beispielsweise das Material, erfasst und gespeichert wird, und/oder
wobei optional beim Erhalten einer Anfrage nach einem Dämmstoffgroßballen die Anfrage eine bestimmte Eigenschaft des benötigten Dämmstoffgroßballens angibt, oder beim Abrufen des Zustands eines Bevorratungssystems, insbesondere Großballenauflösers, und Bestimmen, dass ein Dämmstoffgroßballen benötigt wird, eine bestimmte Eigenschaft des benötigten Dämmstoffgroßballen abgerufen wird, und/oder
wobei optional beim Überprüfen, ob ein Dämmstoffgroßballen im Transportsystem vorhanden ist, überprüft wird, ob ein Dämmstoffgroßballen mit der bestimmten Eigenschaft im Transportsystem vorhanden ist.

14. Ein computerlesbares Medium mit einer Steuerung zum Steuern eines Systems zum Einbringen von Dämmstoffgroßballen in ein Bevorratungssystem, insbesondere einen Großballenauflöser, insbesondere eines Systems nach einem der vorhergehenden Ansprüche, umfassend computerlesbare Daten, die, wenn sie mit einem Prozessor ausgeführt werden, die Schritte eines Verfahrens nach Anspruch 13 durchführen.

15. Verfahren zum Einbringen von Dämmstoffgroßballen in einen Großballenauflöser, insbesondere mit einem System nach einem der vorhergehenden Ansprüche, umfassend die Schritte Zuführen von Dämmstoffgroßballen in ein Transportsystem und Übergabe eines Dämmstoffgroßballens vom Transportsystem an ein Bevorratungssystem, insbesondere einen Großballenauflöser, an einer Übergabestelle, wobei das Verfahren optional einen oder mehrere Schritte eines Verfahrens nach Anspruch 13 umfasst.
